# DEMANDE DE BREVET EUROPEEN

(11) **EP 3 315 270 A1**
(43) Date de publication de la demande: **02.05.2018**
(21) Numéro de dépôt: 16196390.5
(22) Date de dépôt: 28.10.2016
(51) Int. Cl.: B25J 11/00, B23Q 7/04, B27M 1/08, B27M 3/18, B27C 9/00, B27C 3/04

(54) **PROCEDE ET UNITE D'USINAGE DE PANNEAUX D'AMEUBLEMENT**

(71) Demandeur: Schmidt Groupe, 68660 Liepvre (FR)
(72) Inventeur: OFFNER, Olivier, 67730 La Vancelle (FR)
(74) Mandataire: Cabinet Bleger-Rhein-Poupon

(57) **Abrégé**

La présente invention décrit un procédé d'usinage de panneaux d'ameublement (1), tel que perçage, lamage, rainurage, défonçage et autres, sur l'un (3) et/ou l'autre (4) de leurs côtés et/ou sur tout ou partie de leur chant périphérique (5).

Selon ce procédé :
- on dépose ledit panneau (1) dans une position verticale ou sensiblement verticale sur des moyens de transport (6) d'une unité d'usinage (9) ;
- on immobilise ledit panneau (1) sur ces moyens de transport (6) par des moyens de préhension (7) qui leur sont associés ;
- on mesure ledit panneau (1) en hauteur, largeur et épaisseur ;
- on identifie le positionnement dudit panneau (1) sur les moyens de transport (6);
- on amène ledit panneau (1) au-devant d'au moins un poste d'usinage (8);
- on procède aux usinages du panneau (1) par déplacement de moyens d'usinage et/ou dudit panneau (1) sous l'impulsion de moyens d'entrainement que comportent les moyens de transport (6) et constituant l'un des axes de déplacement de ces moyens d'usinage, ceci en fonction des données de positionnement relevées précédemment.

## Description

L'invention concerne un procédé et une unité d'usinage de panneaux d'ameublement, usinage de type perçage, rainurage, défonçage...

La présente invention concerne le domaine de la fabrication d'éléments d'ameublement, par exemple de cuisines, salles de bain, placards, bureaux, etc... et plus particulièrement l'usinage de panneaux destinés à la réalisation de tels éléments d'ameublement.

De manière usuelle, un panneau qu'il soit en bois plein ou à base de fibres de bois et stratifié, lorsqu'il est destiné à la réalisation d'éléments d'ameublement, tels que des éléments de cuisine, armoires ou autres, est tout d'abord coupé en dimensions avant d'être usiné, souvent sur l'un au moins de ses côtés et/ou un ou plusieurs de ses chants périphériques. Ces usinages, sous forme, essentiellement, de perçage, de défonçage et rainurage, ont pour fonction, selon le cas, d'autoriser la jonction de ce panneau avec d'autres pour la réalisation d'un meuble ou de recevoir des pièces spécifiques permettant un tel assemblage, voire des ferrures quelconques de type articulation, poignées, serrures, taquets etc... A noter que de tels usinages doivent être réalisés avec le respect de faibles tolérances, habituellement de l'ordre de 0,2 mm, voire inférieure.

Au vu de la description qui précède, on comprend que le type et le nombre d'usinages à effectuer sur un panneau, ainsi que le positionnement de ces usinages sur ce panneau, que ce soit sur l'un et/ou l'autre de ses côtés ou en périphérie, varient considérablement en fonction de nombreux paramètres tels que :
- positionnement du panneau dans l'élément de meuble à réaliser ;
- taille du panneau ;
- type d'éléments du meuble ;
- etc...

De même, les différents types d'usinage qui peuvent être réalisés sur ces panneaux sont également très importants : différents diamètres de perçage et/ou lamage, rainurage, fraisage, etc.

Une des solutions les plus courantes pour usiner de tels panneaux d'ameublement consiste :
- à disposer ledit panneau sur une première table ;
- à repousser ce panneau contre des butées repères définies;
- à mesurer en épaisseur, en longueur et en largeur ce panneau ;
- à saisir en périphérie le panneau au moyen de pinces adaptées pour l'acheminer sous et/ou au-dessus d'un poste d'usinage ;
- à procéder, successivement, aux différents usinages par déplacement, selon le cas, d'au moins une tête d'usinage au-dessus et/ou en-dessous du panneau, éventuellement combiné au déplacement du panneau lui-même sous et/ou au-dessus de cette ou ces têtes d'usinage, au-devant de l'outil en action. Selon le cas une tête d'usinage située au-dessus et/ou en-dessous du poste d'usinage, comporte des outils susceptibles d'intervenir au niveau des chants latéraux et/ou d'extrémités du panneau, sans compter que l'unité d'usinage peut être pourvue de têtes d'usinage spécifiques pour les interventions sur ces chants périphériques d'un panneau.

Ainsi, au niveau de ce poste d'usinage, une telle unité d'usinage pour panneaux d'ameublement comporte, usuellement, de l'ordre de quatre ou cinq têtes ou blocs d'usinage situées au-dessus de la table et sensiblement autant en-dessous. Chacune de ces têtes d'usinage correspond à un axe de déplacement indépendant de cette unité d'usinage, tout comme les pinces venant saisir le panneau pour assurer son déplacement sur et/ou au-dessous, voire au-devant de ces têtes d'usinage.

A ce sujet, il convient d'observer que ces pinces, dans la mesure où elles sont amenées à s'adapter aux tailles variables des panneaux, sans compter que chacune d'elles doit être à même de s'effacer pour permettre certains usinages, sont soumises, chacune, à des moyens de commande en déplacement indépendant, bien qu'à fonctionnement synchronisé pour positionner et/ou déplacer le panneau au-devant d'une tête d'usinage.

Si l'on tient compte :
- des tolérances de positionnement d'un panneau sur la table en amont du poste d'usinage ;
- des tolérances liées aux repères de référence par rapport auxquels un tel panneau est positionné sur cette table en amont, repères qu'il faut conserver tout au long de l'opération d'usinage ;
- des différents axes de déplacement indépendants : qu'il s'agisse de celui correspondant aux pinces de préhension et de déplacement du panneau, ou de chacune des têtes d'usinage, etc...,
il en résulte une perte de précision d'usinage que l'on ne peut compenser qu'au travers une structure lourde de l'unité d'usinage elle-même.

Aussi, le poids important de l'acier composant nécessairement la structure de ces unités d'usinage de panneaux d'ameublement connus, représente une part importante du coût de ce type d'installation.

Par ailleurs, ces unités d'usinage connues nécessitent de multiples réglages dont les tolérances s'additionnent avec, bien sûr, possibilité de déréglage rendant difficile le respect d'une fabrication souhaitée qualitative.

De plus, en raison d'une disposition horizontale des panneaux, ces unités d'usinage selon l'état de la technique s'avèrent particulièrement encombrante. A noter, à ce sujet, que cette orientation des panneaux est plus ou moins imposée pour garantir une certaine stabilité de la structure et fiabilité d'usinage, mais aussi pour gérer, plus aisément, les déplacements des têtes d'usinage, au-dessus et en-dessous de la table d'usinage.

Un autre inconvénient réside dans l'accessibilité difficile aux têtes d'usinage, de sorte qu'une intervention sur l'une ou l'autre d'entre elles impose l'arrêt complet de l'unité d'usinage, conduisant immanquablement à une baisse de productivité.

A noter, d'ailleurs, que la capacité de production d'une telle unité d'usinage de panneaux d'ameublement est limitée tenant compte :
- du temps nécessaire au pré-positionnement d'un panneau contre les butées repères sur la table en amont ;
- et celui utile pour le relevé dimensionnel du panneau qui ne peut intervenir qu'une fois celui-ci convenablement positionné contre ces butées repères.

En somme, entre l'évacuation d'un panneau sous le poste d'usinage et l'acheminement sous ce dernier d'un nouveau panneau s'écoule un temps sensiblement incompressible d'environ 12 à 15 secondes et une augmentation de productivité ne peut être obtenue que par la multiplication de ces unités d'usinage.

Finalement, la présente invention, au travers du procédé d'usinage et de l'installation permettant sa mise en oeuvre, a pour but de remédier aux inconvénients précités, à savoir :
- un temps d'acheminement trop long entre la fin d'usinage d'un panneau précédent et l'acheminement sous le poste d'usinage du panneau suivant ;
- un nombre d'axes machine indépendants trop important conduisant à une addition de tolérances et, donc, à une perte de précision ;
- un manque de fiabilité du respect des tolérances de fabrication ;
- un temps d'immobilisation trop long en cas de nécessité d'intervention sur les outils d'usinage ;
- une unité d'usinage d'un coût trop élevé en raison de la masse nécessairement conséquente de sa structure pour le respect des tolérances d'usinage ;
- l'encombrement général de ce type d'unité d'usinage lié à une disposition d'usinage des panneaux à l'horizontal.

A ce propos il convient d'observer qu'il existe, d'ores et déjà, des unités d'usinage de panneaux d'ameublement dans une disposition verticale.

Le procédé d'usinage mis en application dans ce type d'unités consiste à déposer ledit panneau, dans cette position verticale sur les moyens de roulement et de prise en charge pour l'acheminer au-devant d'un poste d'usinage comportant, là encore, une ou plusieurs têtes d'usinage, chacune équipée de différents outils. Ces têtes d'usinage, sont, dans ce cas, à mobilité bidirectionnelle, le panneau, au travers des moyens d'acheminement, se déplaçant dans une troisième direction pour assurer tous les types d'usinage utiles dans les trois directions de l'espace.

Là encore, lors de la prise en charge d'un panneau par les moyens d'acheminement pour l'amener devant le poste d'usinage, il est mesuré par des moyens adaptés, que ce soit en largeur, longueur ou épaisseur.

En somme, si ce type d'unité d'usinage des panneaux en position verticale s'avère moins encombrant, l'indépendance entre les axes de déplacement correspondant aux moyens d'acheminement, d'une part, et à la ou les têtes d'usinage d'autre part, rend les réglages complexes et diminue la fiabilité dans le temps de la précision d'usinage.

Par ailleurs, le temps d'acheminement d'un nouveau panneau à usiner devant le poste d'usinage en fin de cycle de traitement d'un panneau précédent, n'est guère plus court, en raison, notamment, de cette indépendance des axes machine et la nécessité de reconnaissance du panneau, dimensionnellement parlant, avant que ne puissent s'opérer les opérations d'usinage proprement dites.

Si ce genre d'unité d'usinage de panneaux à la verticale comporte, généralement, un nombre de têtes d'usinage inférieur, notamment en raison du fait qu'elle ne peut intervenir que d'un côté sur le panneau et que sur certains de ses chants périphériques, l'accessibilité à cette ou ces têtes d'usinage reste difficile, entrainant l'arrêt de production pendant tout le temps d'intervention, nécessairement long, en cas de dysfonctionnement.

Bien évidemment, lorsqu'un usinage de chaque côté du panneau est nécessaire, celui-ci doit être retourné, conduisant, finalement, à un doublement du temps d'intervention sur ce panneau. A noter, à ce sujet, que seule une simple proportion de ces panneaux d'ameublement nécessite un usinage biface. C'est d'ailleurs l'une des raisons pour laquelle ce genre d'unité d'usinage de panneaux en position verticale a été développée, en raison d'un coût de revient significativement moindre en comparaison aux unités d'usinage décrits plus haut.

Finalement, là encore, l'objet de la présente invention a pour but de remédier aux inconvénients de ces unités d'usinage de panneaux en position verticale, inconvénients qui consistent :
- en une moindre fiabilité de la précision d'usinage en raison des axes machine indépendants correspondant aux moyens de déplacement du panneau, d'une part, et des têtes d'usinage, d'autre part ;
- une accessibilité difficile aux outillages ;
- l'arrêt de fabrication prolongé qu'engendre toute intervention sur la tête d'usinage, et
- inconvénient majeur : un temps incompressible et nécessairement long pour l'acheminement, au-devant du poste d'usinage, d'un nouveau panneau à usiner, en fin d'usinage du panneau précédent.

C'est dans le cadre d'une première démarche inventive que l'on a imaginé définir le positionnement et les dimensions d'un panneau par rapport à des moyens de préhension et d'acheminement de ce panneau devant le poste d'usinage.

En somme, c'est en imaginant que ces moyens de préhension et d'acheminement constituent l'un des axes de la machine d'usinage que l'on a répondu au problème de gain de temps de transfert d'un panneau à usiner en fin d'usinage d'un panneau précédent.

Dans le cadre d'une seconde démarche inventive, on a pensé substituer aux actionneurs traditionnels de têtes d'usinage des solutions de l'état de la technique décrit précédemment, par un bras manipulateur de robot à 6 axes, dont l'un des axes au moins est défini par la mobilité des moyens de préhension et d'acheminement.

L'avantage d'un tel bras manipulateur de robot consiste en ce que la moindre défaillance d'une tête d'usinage et/ou d'un outil de cette tête d'usinage, permet à ce bras manipulateur de s'orienter dans une position facilitant le déchargement de cette tête d'usinage hors d'usage et le rechargement d'une nouvelle tête dont il peut se saisir à proximité pour poursuivre les opérations d'usinage, et ce, quasiment sans arrêt de la production dans la mesure où ce changement de tête d'usinage peut se faire en tout ou partie en temps masqué.

Dans la mesure où les moyens de préhension et d'acheminement constituent l'un des axes de ce robot, l'on peut s'affranchir de l'ensemble des moyens habituellement nécessaires de transmission de données résultant de moyens d'acheminement indépendants pour enclencher le fonctionnement d'actionneurs, eux-mêmes indépendants, de têtes d'usinage et inversement, d'où résulte, habituellement, une perte de temps liée au traitement d'informations communiquées réciproquement.

Surtout, la solution selon l'invention permet une identification de positionnement et de dimensionnement d'un panneau en amont de sorte que les moyens de préhension et d'acheminement peuvent, simultanément et sous pilotage du robot d'usinage, commander l'évacuation d'un panneau usiné et amener le panneau suivant. L'avantage est une réduction de ce temps d'acheminement entre 3 à 5 secondes, en comparaison aux 12 à 15 secondes dans les solutions antérieurement mises en oeuvre.

Le gain de productivité qui en résulte est considérable. Surtout, ce gain de productivité est tel, qu'il permet d'envisager la réalisation d'une unité d'usinage comportant au moins un robot d'usinage n'intervenant que sur un côté du panneau et d'assurer le retournement des 15 à 20% d'entre eux concernés par un usinage biface.

Dans l'application à la production de panneaux d'ameublement, la solution selon l'invention permet de diminuer par deux ou trois le nombre de ces unités d'usinage de panneaux pour une même cadence de production, sans compter le gain en encombrement en raison d'un usinage en position verticale de ces panneaux.

A cet effet, l'invention concerne un procédé d'usinage de panneaux d'ameublement caractérisé par le fait que :
- on dépose ledit panneau dans une position verticale ou sensiblement verticale sur des moyens de transport d'une unité d'usinage ;
- on immobilise ledit panneau sur ces moyens de transport par des moyens de préhension qui leur sont associés ;
- on mesure ledit panneau en hauteur, largeur et épaisseur ;
- on identifie le positionnement dudit panneau sur les moyens de transport ;
- on amène ledit panneau au-devant d'un poste d'usinage ;
- on procède aux usinages du panneau par déplacement de moyens d'usinage et/ou dudit panneau sous l'impulsion de moyens d'entrainement que comportent lesdits moyens de transport et constituant l'un des axes de déplacement de ces moyens d'usinage, ceci en fonction des données de positionnement relevées précédemment.

L'invention concerne encore une unité d'usinage de panneaux d'ameublement comportant des moyens de transport d'au moins un panneau en position sensiblement verticale pour acheminer ce dernier au-devant d'au moins un poste d'usinage, ladite unité comportant encore des moyens de relevés de dimensions desdits panneaux, caractérisée par le fait que lesdits moyens de transport sont équipés de moyens de préhension du panneau, ainsi que de moyens d'identification du positionnement de ce dernier sur ces moyens de transport, le poste d'usinage comportant au moins un robot à bras manipulateur pour la commande de déplacement d'au moins une tête d'usinage, les moyens de transport comportant des moyens d'entrainement constituant l'un des axes de ce robot à bras manipulateur.

Les avantages découlant de la présente invention consistent en ce que la prise en charge du panneau par des moyens de transport constituant l'un des axes des moyens d'usinage, permet une reconnaissance du positionnement du panneau par ces moyens d'usinage eux-mêmes, en l'occurrence le robot à bras manipulateur, évitant toute perte de temps liée à un pré-positionnement de ce panneau selon des repères définis, juste en amont du poste d'usinage.

En outre, les moyens de transport étant équipés de moyens de préhension du panneau, assurant son maintien tout au long de son acheminement en direction du poste d'usinage, il est possible, là encore, de s'affranchir de l'étape de préhension de ce panneau par des pinces spécifiques qui, comme dans les solutions selon l'état de la technique ont pour fonction, successivement :
- d'amener un panneau au-devant du poste d'usinage,
- évacuer ce panneau après usinage,
- saisir un nouveau panneau.

Par ailleurs, dans la mesure où, comme indiqué plus haut, les moyens de transport constituent l'un des axes du, voire des robots à bras manipulateur, il est possible de s'affranchir de tout automatisme intermédiaire gérant, comme par le passé, le fonctionnement indépendant d'une table d'alimentation, de pinces de préhension, de têtes d'usinage, etc.

De ce fait, la précision d'usinage n'est dépendante que des tolérances sur chacun des axes du robot à bras manipulateur et non d'une addition de tolérances de moyens de déplacement indépendants.

D'autres buts et avantages de la présente invention apparaîtront au cours de la description qui va suivre se rapportant à un exemple de réalisation.

La compréhension de cette description sera facilitée en se référant aux dessins ci-joints dans lesquels :
- La figure 1 est une représentation schématisée et en plan d'un exemple de panneau d'ameublement comportant une pluralité d'usinages susceptibles d'être réalisés par la mise en oeuvre du procédé selon l'invention, à l'aide d'une unité d'usinage dont un exemple de réalisation est illustré dans les figures 2 et 3 ;
- La figure 2 est une représentation schématisée et en perspective de cette unité d'usinage de panneaux d'ameublement, conforme à l'invention ;
- La figure 3 est une représentation similaire à la figure 2, illustrant en outre les stations de chargement et de déchargement de panneaux d'ameublement en amont et en aval de l'unité d'usinage ;
- La figure 4 est une illustration similaire à la figure 3 correspondant à un second mode de réalisation de l'invention.

Tel que visible dans les figures des dessins ci-joints, la présente invention concerne le domaine de l'usinage de panneaux d'ameublement.

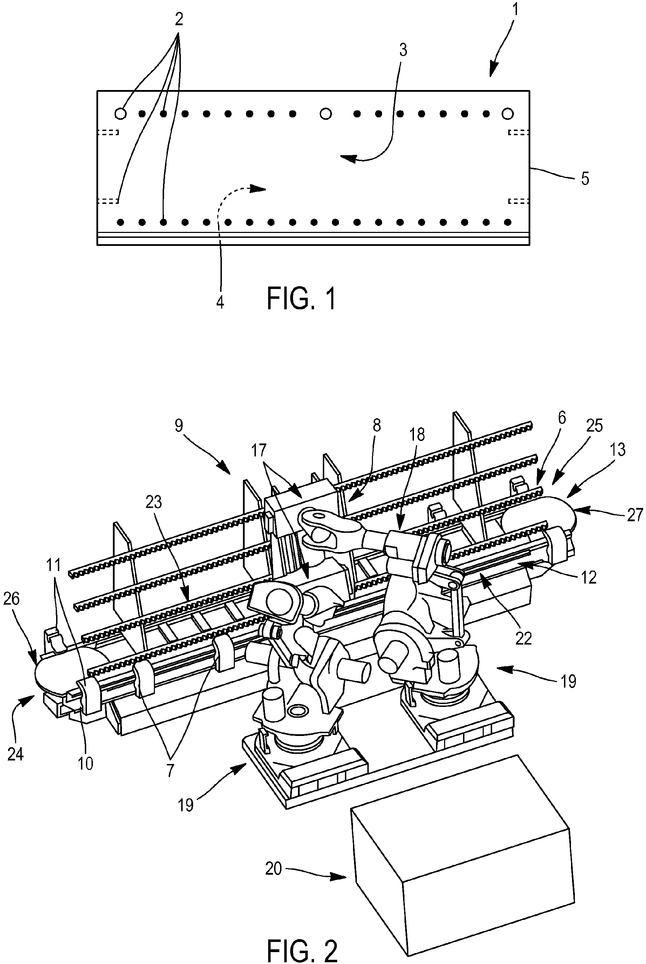

A ce propos et comme représenté dans la figure 1, un tel panneau d'ameublement 1 peut être amené à être usiné, sous forme de perçage, lamage, rainurage et autres 2, sur l'un 3 et/ou l'autre 4 de ses côtés et/ou sur tout ou partie de son chant périphérique 5.

Selon l'invention, pour réaliser ces usinages 2, un tel panneau d'ameublement 1 est disposé dans une position verticale ou sensiblement verticale sur des moyens de transport 6, lesquels comportent des moyens de préhension 7 pour acheminer un tel panneau d'ameublement 1 au-devant d'au moins un poste d'usinage 8.

De manière préférentielle, l'unité d'usinage 9 comporte des moyens de transport 6 pourvus d'une pluralité de moyens de préhension 7 de manière à pouvoir acheminer successivement et/ou parallèlement plusieurs panneaux d'ameublement 1 en direction du ou des postes d'usinage 9.

Ainsi, selon un mode de réalisation plus particulier, ces moyens de préhension 7 peuvent se présenter sous forme de chariots 10 à pinces 11, sachant que les moyens de transport 6 peuvent être pourvus de plusieurs de ces chariots 10 décrivant, avantageusement et sous l'impulsion de moyens d'entraînement et de moyens de guidage 12 appropriés, un circuit bouclé 13. Cela permet d'amener le ou les chariots 10 devant, notamment, un poste de chargement 14 en panneau d'ameublement 1, puis au-devant du poste d'usinage 8 avant de regagner le poste de chargement 14, après un passage devant un poste de déchargement 14A.

Selon l'invention, après prise en charge par les moyens de préhension 7 des moyens de transport 6 d'un panneau d'ameublement 1, celui-ci fait l'objet d'une identification de son positionnement sur ces moyens de transport 6 dont les informations sont transmises au poste d'usinage 8.

Aussi, l'unité d'usinage 9 comporte des moyens 15 d'identification de ce positionnement, moyens qui peuvent emprunter différentes formes de réalisation, tels que capteurs optiques et/ou capteurs mécaniques et/ou caméras 3D ou autres.

De même, au cours de l'acheminement d'un panneau d'ameublement 1 en direction d'un poste d'usinage 8, il est procédé au relevé de ses dimensions, en particulier de sa largeur, de sa longueur et de son épaisseur.

Dans ce but, l'unité d'usinage 9 comporte, là encore, des moyens 16 adaptés de relevé de ces dimensions du panneau d'ameublement 1.

Tout comme précédemment, de tels moyens de relevés de dimension 16 sont connus par l'homme du métier et peuvent être de type optique et/ou mécanique et/ou caméras 3D ou autre.

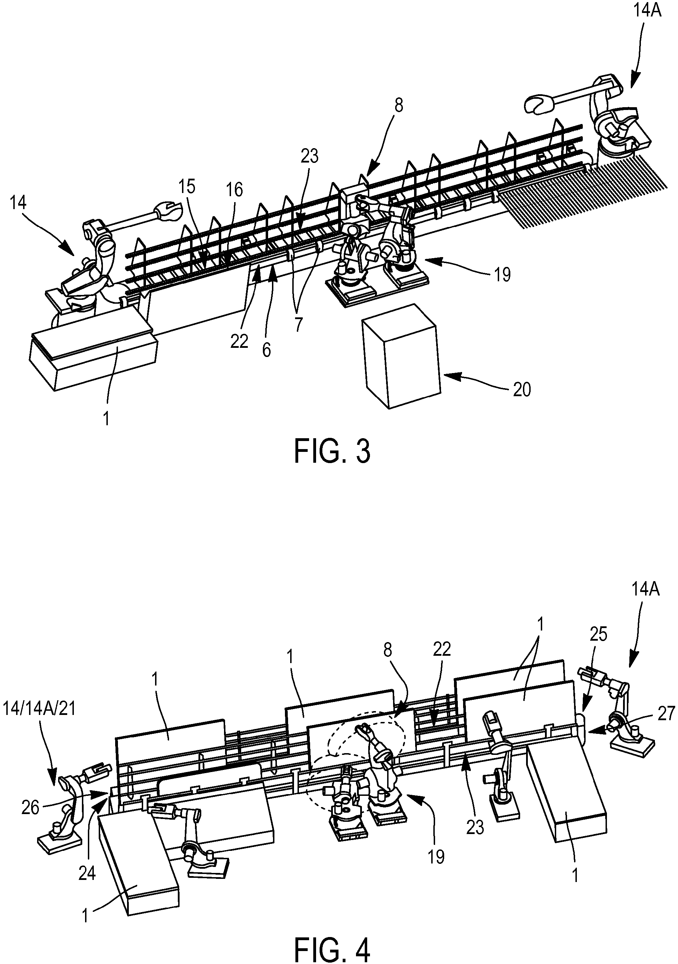

A noter que ces moyens d'identification de positionnement 15, tout comme les moyens de relevés de dimension 16 n'ont été représentés que très schématiquement dans la figure 3 des dessins.

Dans l'étape suivante du procédé d'usinage du panneau d'ameublement 1, selon l'invention, celui-ci est amené au-devant du poste d'usinage 8 par les moyens de transport 6 avant qu'il ne soit procédé aux usinages par le ou les outils d'au moins une tête d'usinage 17 que porte un bras manipulateur 18 d'au moins un robot 19.

Selon une particularité de l'invention, les moyens de transport 6 constituent au moins un axe de ce ou ces robots 19 à bras manipulateur 18.

Comme cela ressort de ce qui précède, l'unité d'usinage 9 selon l'invention comprend au moins un poste d'usinage 8 pourvu d'un ou plusieurs robots 19 à bras manipulateur 18. Le bras manipulateur 18 de chacun de ces robots 19 peut être pourvu d'une ou plusieurs têtes d'usinage 17 destinées à réaliser des usinages distincts sur un panneau d'ameublement 1 et/ou en tout ou partie identiques, sachant que chacun de ces robots 19 est susceptible d'intervenir sur un tel panneau 1, selon le cas, successivement et/ou conjointement et/ou en substitution l'un de l'autre, par exemple en cas de défaillance ou de maintenance d'un de ces robots 19 ou encore de changement de tête d'usinage 17 et/ou d'outil de cette tête d'usinage 17 d'un robot.

D'ailleurs, de manière avantageuse, l'unité d'usinage peut être pourvue, à hauteur d'un poste d'usinage 8, d'un poste 20 de changement de tête d'usinage et/ou d'outil, poste 20 très schématiquement représenté dans les figures 2, 3 et 4. Ce poste 20 peut se situer à proximité immédiate, par exemple à l'arrière du ou des robots 19. Ainsi, à la moindre défaillance d'une tête d'usinage 17 ou simplement d'un outil, il est possible au bras manipulateur 18 du robot 19 d'accéder à ce poste de changement 20 pour y déposer la tête d'usinage défaillante et en prendre une autre, de manière à pouvoir poursuivre les opérations d'usinage sans guère de perte de temps. Cette solution selon l'invention permet, par conséquent, de remédier au problème d'accessibilité à une tête d'usinage 17 défaillante et d'éviter un arrêt prolongé de l'unité d'usinage 9. La réparation de la tête d'usinage défaillante est ainsi accessible par l'opérateur en toute sécurité.

Selon encore une autre particularité de l'invention, une telle tête d'usinage 17 d'un robot 19 peut être pourvue de moyens capteurs optiques (non visibles sur les dessins) susceptibles de procéder à un contrôle de cohérence entre les données transmises par les moyens d'identification de positionnement 15 et les moyens de relevés de dimensions 16 d'un panneau d'ameublement 1 avant de démarrer les opérations d'usinage proprement dites.

Une telle unité d'usinage 9 selon l'invention peut être pourvue de robots 19 distincts pour une intervention de part et d'autre du panneau d'ameublement 1, notamment pour usiner chacun des côtés de ce dernier. Cependant, tenant compte du nombre de panneaux d'ameublement concernés par un tel usinage biface, soit entre 10 et 20% des panneaux intervenant dans la conception de mobilier habituel, la solution selon l'invention prévoit encore, en tant qu'alternative, un poste de retournement 21 en aval du poste d'usinage 8 réalisé par une technologie robotique. Au travers de ce poste de retournement 21, un panneau d'ameublement, en sortie de ce poste d'usinage 8, peut être retourné et redéposé, soit immédiatement, soit postérieurement, selon le mode de réalisation envisagé (figure 3 et 4) sur les moyens de transport 6.

Pour en revenir aux moyens de préhension 7 définis, comme précédemment indiqué, par exemple, sous forme de chariots 10 à pinces 11, ils sont amenés à se déplacer, grâce aux moyens de guidage 12 adaptés, le long du circuit bouclé 13 comprenant, par exemple, un chemin de glissement et/ou de roulement et se subdivisant en un brin de chemin ascendant 22 et un brin de chemin descendant 23 aux extrémités 24, 25 desquelles, ils se rejoignent par des tronçons de jonction 26, 27.

Si ces tronçons de jonction 26, 27 peuvent être définis courbes, de manière adaptée, pour pouvoir être empruntés par les chariots 10, comme représenté dans les figures 2 et 3, ils peuvent encore se présenter sous forme de tronçons de transfert, permettant d'amener par translation un chariot et/ou simultanément plusieurs chariots 10, depuis une extrémité 24 du brin de chemin descendant 23 au niveau de l'extrémité 24 correspondante du brin de chemin ascendant 22 et de manière similaire à l'extrémité opposée 25 de ces brins 22, 23, ceci comme représenté dans la figure 4 correspondant à un second mode de réalisation de l'invention.

A ce propos, dans le cadre du premier mode de réalisation correspondant aux figures 2 et 3, les panneaux 1 se déplacent depuis la station de chargement 14, en amont de l'unité d'usinage 9 jusqu'à la station de déchargement 14A en aval, ceci en étant pris en charge par les moyens de préhension 7 se déplaçant le long du brin de chemin ascendant 22 du circuit bouclé 13 sous l'impulsion des moyens d'entrainement et de guidage 12. Ces moyens de préhension 7 revenant à vide sur le brin chemin descendant 23 pour les ramener depuis le poste de déchargement 14A vers le poste de chargement 14.

Dans le second mode de réalisation visible dans la figure 4, les postes de chargement 14 et de déchargement 14A se trouvent à la même extrémité 25 de l'unité d'usinage 9. Les panneaux 1 sont pris en charge à cette extrémité 25 par les moyens de préhension 7 se déplaçant sur le brin ascendant 22 du circuit bouclé 13, puis, à l'extrémité 26, sont transférés par lesdits moyens de préhension 7 sur le brin descendant 23 pour regagner l'extrémité 25 en passant devant au moins un poste d'usinage 8.

Le choix retenu pour l'un ou l'autre de ces modes de réalisations dépendra de l'implantation de l'unité d'usinage sur un site de production d'éléments d'ameublement.

Le long de ces brins de chemin ascendants 22 et descendants 23, ainsi qu'au niveau des tronçons de jonction 26, 27, les moyens de transport 6 comportent des moyens d'entraînement adaptés de ces chariots 10, moyens d'entraînement non visibles sur les figures.

Conformément à l'invention, ces moyens d'entrainement définissent au moins l'un des axes du ou des robots 19 du poste d'usinage 8.

Les moyens d'identification du positionnement 15 d'un panneau 1 sur les moyens de transport 6, tout comme les moyens de relevés de dimensions 16 d'un tel panneau peuvent être implantés, selon le mode de réalisation, le long du brin ascendant 22 ou le long du brin descendant 23 du circuit bouclé 13, dans tous les cas en amont du poste d'usinage 8.

En ce qui concerne le poste de retournement 21 d'un panneau 1, en aval du poste d'usinage 8, il peut emprunter différentes formes de réalisation, ceci en particulier selon le mode de réalisation envisagé.

Ainsi, dans le cadre du mode de réalisation correspondant aux figures 2 et 3, ce poste de retournement peut substantiellement être défini, par exemple par le poste de déchargement 14A, sous forme d'un robot manipulateur, prenant en charge un panneau pour le décharger des moyens de transport 6 et, plutôt que de le déposer sur une pile de panneaux terminés, le dépose sur une autre pile de panneaux destinés à être usinés sur chacun de leurs côtés 3, 4, d'où il pourra être repris pour être acheminé vers le poste de chargement 14.

Alternativement, dans le mode de réalisation correspondant à la figure 4, on peut imaginer qu'en aval du brin descendant 23, les mêmes moyens prévus pour évacuer un panneau d'ameublement usiné depuis l'unité d'usinage 9 pour l'acheminer, soit vers une zone de stockage, soit vers une unité de traitement en aval, soient également conçus pour retourner ce panneau et le redéposer dans une position verticale ou sensiblement verticale sur les moyens de transport 6, en particulier sur le brin ascendant 22 du circuit bouclé 13 en vue du traitement de son côté opposé, après identification de positionnement et relevés de dimensions.

Selon une autre particularité de la présente invention, le circuit bouclé 13 des moyens de transport 6 comporte non pas un, mais plusieurs brins de chemin descendants 23 et/ou ascendants 22 susceptibles d'être empruntés par les chariots 10.

Une telle conception présente l'avantage que plusieurs panneaux peuvent être amenés dans une position d'attente en amont du poste d'usinage 8 sur chacun des brins de chemin ascendants 22 et/ou descendants 23. Cette solution permet, là encore, un gain de temps d'acheminement d'un panneau au-devant du poste d'usinage et/ou de créer un stock tampon de panneaux sur les moyens de transport 6 et/ou d'usiner en parallèle deux ou davantage de panneaux par plusieurs robots 19 et/ou de permettre à un robot 19, ayant terminé son cycle d'usinage, de débuter le cycle d'usinage du panneau suivant, etc.

Les avantages essentiels résultant de la présente invention, plus particulièrement en ce que les moyens de transport 6 constituent l'un des axes du ou des robots 19, consistent en ce que le transfert d'un panneau au-devant d'un poste d'usinage 8, disposant des données de positionnement et de dimensions de ce panneau sur ces moyens de transport 6, peut se faire de manière plus rapide. Le gain de temps est substantiel et permet des cadences de production de deux à trois fois supérieures en comparaison aux unités d'usinage de panneaux d'ameublement connues au travers de l'état de la technique.

L'invention permet également un gain de fiabilité en matière de précision d'usinage, sans compter la grande facilité de remplacement d'une tête d'usinage quasiment sans coupure de production inévitable dans les solutions antérieurement connues.

## Revendications

1. Procédé d'usinage de panneaux d'ameublement (1), tel que perçage, lamage, rainurage, défonçage et autres, sur l'un (3) et/ou l'autre (4) de leurs côtés et/ou sur tout ou partie de leur chant périphérique (5), **caractérisé par le fait que** :
- on dépose ledit panneau (1) dans une position verticale ou sensiblement verticale sur des moyens de transport (6) d'une unité d'usinage (9);
- on immobilise ledit panneau (1) sur ces moyens de transport (6) par des moyens de préhension (7) qui leur sont associés ;
- on mesure ledit panneau (1) en hauteur, largeur et épaisseur ;
- on identifie le positionnement dudit panneau (1) sur les moyens de transport (6);
- on amène ledit panneau (1) au-devant d'au moins un poste d'usinage (8);
- on procède aux usinages du panneau (1) par déplacement de moyens d'usinage et/ou dudit panneau (1) sous l'impulsion de moyens d'entrainement que comportent les moyens de transport (6) et constituant l'un des axes de déplacement de ces moyens d'usinage, ceci en fonction des données de positionnement relevées précédemment.

2. Procédé selon la revendication 1 **caractérisé en ce qu'**en aval d'un poste d'usinage (8), pour l'usinage de chacun des côtés (3, 4) d'un panneau (1) :
- on retourne ce dernier et on le dépose une nouvelle fois dans une position verticale ou sensiblement verticale, sur les moyens de transport (6) ;
- on l'immobilise sur ces moyens de transport par les moyens de préhension (7) ;
- on le mesure en hauteur largeur et épaisseur ;
- on identifie son positionnement sur lesdits moyens de transport (6) ;
- et on l'amène au-devant d'au moins un poste d'usinage (8) et on procède aux usinages du panneau (1) par déplacement de moyens d'usinage et/ou dudit panneau (1) sous l'impulsion desdits moyens de transport (6) constituant l'un des axes de déplacement de ces moyens d'usinage, ceci en fonction des données de positionnement relevées précédemment.

3. Procédé selon la revendication 1 ou 2 **caractérisé en ce qu'**on amène au moins un deuxième panneau dans une position d'attente au-devant d'un poste d'usinage pour permettre à un robot (19), ayant terminé un cycle d'usinage sur un premier panneau, de débuter un nouveau cycle d'usinage du second panneau en position d'attente.

4. Procédé selon l'une quelconque des revendications précédentes, caractérisé ce qu'on procède à un contrôle de cohérence entre les données transmises par les moyens d'identification de positionnement (15) et les moyens de relevés de dimensions (16) d'un panneau d'ameublement (1) avant de démarrer les opérations d'usinage de ce dernier.

5. Unité d'usinage (9) de panneau d'ameublement (1), pour la mise en oeuvre du procédé selon les revendications précédentes, comportant des moyens de transport (6) d'au moins un panneau (1) en position sensiblement verticale pour acheminer ce dernier au-devant d'au moins un poste d'usinage (8), ladite unité (9) comportant encore des moyens (16) de relevés de dimensions dudit panneau (1), **caractérisée par le fait que** lesdits moyens de transport (6) sont équipés de moyens de préhension (7) du panneau (1), ainsi que de moyens d'identification (15) du positionnement de ce dernier sur ces moyens de transport (6), le poste d'usinage (8) comportant au moins un robot (19) à bras manipulateur (18) pour la commande de déplacement d'au moins une tête d'usinage (17), les moyens de transport (6) comportant des moyens d'entrainement constituant l'un des axes de ce robot (19) à bras manipulateur (18).

6. Unité d'usinage (9) selon la revendication 5, **caractérisée en ce que** les moyens de transport (6) sont pourvus de moyens de préhension (7) pour acheminer successivement plusieurs panneaux d'ameublement (1) en direction du poste d'usinage (9).

7. Unité d'usinage (9) selon la revendication 6 **caractérisée en ce que** les moyens de préhension (7) comprennent au moins un chariot (10) à pinces (11).

8. Unité d'usinage (9) selon l'une des revendications 5 à 7, **caractérisée en ce que** les moyens de transport (6) comprennent des moyens d'entraînement et des moyens de guidage (12) pour soumettre le ou les chariots (10) à un déplacement selon un circuit (13) bouclé en passant au moins au-devant d'un poste de chargement (14) en panneaux d'ameublement (1) et d'au moins un poste d'usinage (8).

9. Unité d'usinage (9) selon l'une des revendications 5 à 8, **caractérisée en ce que** les moyens d'identification de positionnement (15) et les moyens de relevés de dimensions (16) comprennent un ou plusieurs capteurs optiques et/ou capteurs mécaniques et/ou une ou plusieurs caméras 3D.

10. Unité d'usinage (9) selon l'une des revendications 5 à 9, **caractérisée en ce que** le bras manipulateur (18) d'un robot (19) est pourvu de plusieurs têtes d'usinage (17) destinées à réaliser des usinages distincts et/ou en tout ou partie identiques.

11. Unité d'usinage selon l'une des revendications 5 à 10, **caractérisée en ce qu'**une telle tête d'usinage (17) d'un robot (19) est pourvue de moyens capteurs, notamment optiques pour procéder à un contrôle de cohérence entre les données transmises par les moyens d'identification de positionnement (15) et les moyens de relevés de dimensions (16) d'un panneau d'ameublement (1) avant usinage de ce dernier.

12. Unité d'usinage (9) selon l'une des revendications 5 à 11, **caractérisée en ce qu'**elle comporte à hauteur d'un poste d'usinage (8), un poste (20) de changement de tête d'usinage et/ou d'outil.

13. Unité d'usinage (9) selon l'une des revendications 5 à 12, **caractérisée en ce qu'**elle comporte des robots (19) distincts pour usiner chacun des côtés (3, 4) d'un panneau d'ameublement (1).

14. Unité d'usinage (9) selon l'une des revendications 5 à 13, **caractérisée en ce qu'**elle comporte un poste de retournement (21) d'un panneau d'ameublement (1) en aval du ou des postes d'usinage (8).

15. Unité d'usinage (9) selon la revendication 8, **caractérisée en ce que** le circuit bouclé (13) comprend un chemin de glissement et/ou de roulement se subdivisant en un brin de chemin ascendant (22) et un brin de chemin descendant (23), aux extrémités (25, 26) desquelles ils se rejoignent par des tronçons de jonction (26, 27).

16. Unité d'usinage (9) selon la revendication 15, **caractérisée en ce que** les tronçons de jonction (26, 27) sont définis sous forme de tronçons de transfert pour amener par translation un chariot et/ou plusieurs chariots (10) simultanément, depuis une extrémité (24) du brin de chemin descendant (23) au niveau de l'extrémité (24) correspondante du brin de chemin ascendant (22) et de manière similaire à leur extrémité opposée (25).

17. Unité d'usinage (9) selon la revendication 8, **caractérisée en ce que** les moyens d'identification du positionnement (15) d'un panneau (1) sur les moyens de transport (6), tout comme les moyens de relevés de dimensions (16) d'un tel panneau sont implantés le long du brin ascendant (22) et/ou le long du brin descendant (23) du circuit bouclé (13), en amont du poste d'usinage (8).

18. Unité d'usinage (9) selon la revendication 8, **caractérisée en ce que** le circuit bouclé (13) des moyens de transport (6) comporte plusieurs brins de chemin descendants (23) et/ou ascendants (22) aptes à être empruntés par les chariots (10).
